# EUROPÄISCHE PATENTANMELDUNG

(11) **EP 3 144 858 A1**
(43) Veröffentlichungstag der Anmeldung: **22.03.2017**
(21) Anmeldenummer: 15002724.1
(22) Anmeldetag: 21.09.2015
(51) Int. Cl.: G06K 19/077

(54) **IDENTIFIZIERBARER WERKSTOFF UND IDENTIFIZIERBARE WERKSTÜCKE**

(71) Anmelder: Aberl Ingenieurbüro, 82467 Garmisch-Partenkirchen (DE)
(72) Erfinder: Aberl, Hannes, 82493 Krün (DE)
(74) Vertreter: Samson & Partner Patentanwälte mbB

(57) **Zusammenfassung**

Identifizierbarer Werkstoff, umfassend einen urformbaren Ausgangsstoff und wenigstens ein in dem Ausgangsstoff angeordnetes Identifikationsmittel, sowie Werkstück hergestellt aus einem solchen identifizierbaren Werkstoff, sowie Herstellungsverfahren und Identifikationsverfahren für derartige Werkstücke.

## Beschreibung

### Gebiet der Erfindung

Die Erfindung bezieht sich aus das Gebiet der Werkstoffe, Werkstücke und Herstellungsverfahren zum Herstellen von Werkstücken aus Werkstoffen im Allgemeinen und insbesondere auf identifizierbare Werkstoffe, identifizierbare Werkstücke und Verfahren zu deren Herstellung und Identifikation.

### Hintergrund der Erfindung

Die Automatisierung der Herstellung, Lagerung, Logistik und Vertrieb stellt wachsende Anforderungen an die automatische und verlässliche Identifizierung von Werkstoffen, Werkstücken und Produkten.

Transponder, insbesondere solche mit RFID-Chips, finden aufgrund ihrer kostengünstigen Herstellung in großen Stückzahlen Anwendung in verschiedensten Bereichen der Identifikation, wie beispielsweise der Zugangskontrolle zu Gebäuden, der Rückverfolgung von Dokumenten und der Warenregistrierung an Supermarktkassen.

Um eine verlässliche Identifikation von Produkten zu ermöglichen, ist es wünschenswert die Möglichkeiten zur missbräuchlichen Manipulation oder Entfernung des Identifikationsmittels zu verringern.

Der Erfindung liegt die Aufgabe zugrunde, identifizierbare Werkstoffe, identifizierbare Werkstücke und Verfahren zur Herstellung oder Identifikation von identifizierbaren Werkstücken bereitzustellen.

### Kurzbeschreibung der Erfindung

Diese Aufgabe wird gelöst durch Vorrichtungen und Verfahren gemäß der unabhängigen Patentansprüche. Die abhängigen Patentansprüche beschreiben bevorzugte Ausführungsformen.

Erfindungsgemäß ist ein identifizierbarer Werkstoff offenbart, welcher einen urformbaren Ausgangsstoff und wenigstens ein in dem Ausgangsstoff angeordnetes Identifikationsmittel umfasst.

Im Folgenden sollen "Werkstoff" insbesondere das weitgehend unbehandelte Rohmaterial und "Werkstück" insbesondere das weitgehend verarbeitete Produkt bezeichnen.

Der Ausgangsstoff kann insofern als formlos bezeichnet werden, als er (noch) nicht die Form aufweist, welche der Werkstoff und/oder ein daraus hergestelltes Werkstück haben soll(en).

Der Ausgangsstoff umfasst Materialen und Stoffe im Sinne der Fertigungstechnik insbesondere in folgenden Zuständen: flüssig, plastisch oder teigig, breiig oder pastenförmig, körnig oder pulverförmig, spanförmig, faserförmig, gas- oder dampfförmig, ionisiert, Schüttgut.

Im Folgenden kann "urformbar" insbesondere im Sinne der DIN-Norm 8580 verstanden werden: Urformen soll als das Herstellen eines geometrisch bestimmten, festen Körpers (z.B. eines Werkstücks) aus einem - verglichen mit dem Körper - formlosen Stoff (z.B. einem Ausgangsstoff oder Werkstoff) durch Schaffen eines Stoffzusammenhalts verstanden werden. Insbesondere sind eine Vielzahl von Ausgangsstoffen umfasst, welche beispielsweise nach ihrem Zustand (flüssig, plastisch oder teigig, breiig oder pastenförmig, körnig oder pulverförmig, spanförmig, faserförmig, gas- oder dampfförmig, ionisiert, etc.) unterschieden werden können. Dementsprechend soll mit urformbar die Eignung eines Ausgangsstoffs für das Urformen bezeichnet sein.

Im Folgenden soll "identifizierbar" insbesondere angeben, dass der Werkstoff und/oder ein daraus gefertigtes Werkstück identifiziert und insbesondere von anderen Werkstoffen bzw. Werkstücken unterschieden werden kann/können. "Identifizierbar" umfasst eine eineindeutige Identifizierbarkeit eines Werkstoffes (z.B. von Werkstoffen mit gleichem Ausgangsstoff und/oder Werkstoffen mit anderem Ausgangsstoff), aber auch die Identifizierbarkeit eines Werkstofftyps (z.B. Werkstoffe mit gleichem Ausgangsstoff, gleichem Lieferdatum, gleichem Ursprung oder Zulieferer, etc.). Die Identifizierbarkeit wird mittels des Identifikationsmittels erreicht.

Hierfür kann - dem Werkstoff und/oder einem daraus gefertigten Werkstück - ein Identifikationscode zugeteilt (programmiert, geschrieben) werden. Der Identifikationscode kann in das Identifikationsmittel integriert werden und zu einem späteren Zeitpunkt wiederum bestimmt (detektiert, ausgelesen) werden, um anhand des Identifikationscode den Werkstoff bzw. ein daraus hergestelltes Werkstück zu identifizieren.
Ein Identifikationscode kann vorzugsweise einen Identifikationsnummer, einen Identifikationsschlüssel, ein Identifikationssignal und/oder einen binären Wert umfassen.

In Bezug auf einen Werkstoff kann insbesondere eine oder mehrere der folgenden Eigenschaften mittels eines Identifikationscodes identifiziert werden: eine chemische Zusammensetzung des Werkstoffs, ein Lieferdatum des Werkstoffs, ein Ursprung oder Zulieferer eines Werkstoffs, etc. Ein Identifikationscode kann eindeutig für einen Werkstoff sein, muss jedoch nicht eindeutig für einen Werkstoff sein. So können beispielsweise mehrere unterschiedliche Werkstoffe ein gleiches Lieferdatum haben.

Im Folgenden soll mit Identifikationsmittel jegliche Vorrichtung bezeichnet sein, welche dazu ausgelegt ist, dass ihr ein Identifikationscode zugeordnet werden kann und dieser Identifikationscode detektiert (ausgelesen) werden kann.

Bevorzugt kann eine Vielzahl von Identifikationsmitteln in dem Ausgangsstoff verteilt angeordnet sein. Insbesondere kann diese Verteilung zufällig oder stochastisch erfolgen. Alternativ kann diese Verteilung im Wesentlichen homogen oder gleichmäßig sein. Die Verteilung kann beispielsweise durch Mischen erfolgen. Auch die Anzahl an Identifikationsmitteln in dem Ausgangsstoff oder die Anzahl an Identifikationsmitteln pro Stoffmenge des Ausgangsstoffs kann zufällig oder stochastisch bestimmt sein. Alternativ kann die Anzahl an Identifikationsmitteln in dem Ausgangsstoff oder die Anzahl an Identifikationsmitteln pro Stoffmenge des Ausgangsstoffs vorbestimmt sein, beispielsweise anhand der Größe und/oder Menge der herzustellenden Werkstücke. Eine Vielzahl von Identifikationsmitteln ist vorteilhaft, da die Entfernung oder Zerstörung oder missbräuchliche Manipulation aller erschwert wird.

Bevorzugt kann das wenigstens eine Identifikationsmittel einmalig oder mehrfach programmierbar sein. Im Folgenden soll mit programmieren (oder beschreiben) eines Identifikationsmittel das Schreiben eines Identifikationscode in oder auf das Identifikationsmittel bezeichnet sein, welcher Identifikationscode zu einem späteren Zeitpunkt detektiert (oder ausgelesen) werden kann, um das Identifikationsmittel und/oder ein das Identifikationsmittel umfassenden Werkstoff und/oder ein das Identifikationsmittel umfassendes Werkstück zu identifizieren.

Das Programmieren des wenigstens einen Identifikationsmittel kann bevorzugt mittels Strahlung, z.B. Radiowellen im Falle von RFID-Transponder(n) als Identifikationsmittel(n), erfolgen. Einmalig programmierbare Identifikationsmittel sind in manchen Ausführungsformen bevorzugt, wenn ein Identifikationscode, z.B. eine Seriennummer dauerhaft vergeben werden soll, ohne die Möglichkeit diesen Identifikationscode nachträglich zu ändern. Mehrmalig programmierbare Identifikationsmittel sind bevorzugt, wenn der Identifikationscode nach Vergabe änderbar sein soll. Eine Änderung des Identifikationscodes nach erstmaliger Vergabe kann ferner an Kriterien gebunden sein, welche eine missbräuchliche Manipulation ausschließen oder erschweren. So können die Identifikationsmittel insbesondere dazu ausgelegt sein, eine Änderung lediglich nach Authentifizierung, z.B. durch Übermittlung eines Passcodes, zuzulassen. Alternativ oder zusätzlich können die Identifikationsmittel dazu ausgelegt sein, die Änderung zu protokollieren. So kann beispielsweise bei Änderung im Identifikationsmittel ein binäres Änderungs-Flag auf "true" gesetzt oder ein inkrementeller Zähler der Anzahl von vorgenommenen Änderungen um 1 erhöht werden. Ferner können erfindungsgemäße Verfahren auch bei mehrmalig programmierbaren Identifikationsmitteln die missbräuchliche Manipulation erschweren, indem in manchen Ausführungsformen z.B. alle Identifikationsmittel der Vielzahl von Identifikationsmitteln gleichermaßen geändert werden müssten, was durch die schiere Anzahl an Identifikationsmitteln erschwert oder unmöglich sein kann.

Bevorzugt kann der Ausgangsstoff wenigstens einen der folgenden Ausgangsstofftypen umfassen: Kunststoff, Faserverbundwerkstoff, Harz, strahlenaushärtbare Flüssigkeit, Gips, Keramik, Ton, Metall. Der Ausgangsstoff kann in wenigstens einem der folgenden Zustände vorliegen: flüssig, plastisch oder teigig, breiig oder pastenförmig, körnig oder pulverförmig, spanförmig, faserförmig, gas- oder dampfförmig, ionisiert.

Bevorzugt kann aus dem Ausgangsstoff mittels wenigstens einem der folgenden Urform-Fertigungsverfahren ein fester Körper herstellbar sein: Thermoplastisches Umformen (z.B. Pressen, Tiefziehen, etc.), Spritzgießen, Extrudieren, Lasersintern, 3D-Drucken, Druckgießen.

Beim Spritzgießen der Ausgangsstoff in eine formgebende Kavität eingespritzt, aus der er nach Aushärtung als Werkstück entnommen werden kann. Auch beim Druckgießen dient eine Gussform als Vorlage für das zu gießende Werkstück. Bei der Extrusion wird der Ausgangsstoff durch eine formgebende Öffnung, z.B. eine Düse, gepresst, um ein längliches Werkstück mit einem durch die Öffnung bestimmten Querschnitt herzustellen. Beim Lasersintern wird ein feinkörniger oder pulverförmiger Ausgangsstoff per Laser erhitzt, um Stoffzusammenhalt zu schaffen. Auch beim 3D-Drucken geschieht die Herstellung typischerweise schichtweise und gerastert.

Bevorzugt kann das wenigstens eine Identifikationsmittel ein Transceiver sein, wobei Transceiver eine Vorrichtung bezeichnet, welche sowohl als Sender (transmitter) als auch als Empfänger (receiver) betrieben werden kann.

Bevorzugt kann das wenigstens eine Identifikationsmittel ein Transponder sein. Im Folgenden soll Transponder eine Vorrichtung bezeichnen, welche als Antwort (*responder*) auf eine empfangene Anfrage ein Signal aussendet *(transmitter).* Hiervon sind passive Transponder, die keine eigene Energieversorgung aufweisen und denen zum Betrieb erforderliche Energie von außen zugeführt wird, und aktive Transponder mit eigener Energieversorgung umfasst. Passive Transponder können die für den Betrieb notwendige Energie beispielsweise aus einem Anfrage-Signal erhalten, mittels dem auf den Transponder zugegriffen wird.

Bevorzugt kann das wenigstens eine Identifikationsmittel wenigstens eine der folgenden Komponenten umfassen: eine Antenne, einen Schwingkreis, einen analogen Schaltkreis, einen digitalen Schaltkreis, einen Mikroprozessor, einen Festwertspeicher (ROM), einen einmalig programmierbaren Festwertspeicher (PROM), ein EPROM, ein EEPROM, ein FRAM oder FeRAM,

Besonders bevorzugt kann das wenigstens eine Identifikationsmittel ein RFID-Transponder sein. RFID-Transponder nutzen elektromagnetische Wellen im Radiofrequenzbereich als Signale. Die Signale können dem Beschreiben/Programmieren des RFID-Transponders und/oder dem Auslesen/Detektieren des RFID-Transponders dienen.

Besonders bevorzugt handelt es sich um einen passiven RFID-Transponder. Ein passiver RFID-Transponder kann beispielsweise einen Schwingkreis oder eine Spule als Antenne sowie eine digitale Schaltung umfassen. Die digitale Schaltung kann als Mikrokontroller und/oder Speicher dienen. Ein elektromagnetisches Wechselfeld mit Frequenz im Radiofrequenzbereich kann durch die Antenne aufgenommen, an die digitale Schaltung gesendet und von dieser verarbeitet werden. Die digitale Schaltung kann daraufhin ein Antwort-Signal erzeugen, welches durch die Antenne als feldschwächende Modulation oder gegenphasige Reflektion des eingestrahlten Wechselfeldes übertragen wird. Somit kann ein passiver RFID-Transponder antworten, ohne ein eigenes Feld erzeugen zu müssen.

Ferner ist erfindungsgemäß ein Verfahren zur Herstellung eines identifizierbaren Werkstücks offenbart. Das Herstellungsverfahren umfasst das Bereitstellen eines erfindungsgemäßen identifizierbaren Werkstoffs und das Durchführen eines Urform-Fertigungsverfahrens, um aus dem identifizierbaren Werkstoff ein identifizierbares Werkstück herzustellen.

Insbesondere die folgenden Erzeugnisse sollen vom Begriff "Werkstück" beispielsweise umfasst sein: Fahrzeug-Komponenten wie Stoßstange, Lenkräder, Karosserie; Elektronik-Zubehör wie Laptop-Gehäuse, Smartphone-Gehäuse; Maschinen-Komponenten wie Lager, Ritzel, Wellen; Flugzeug-Komponenten, wie Tragflächen, Türen, Sitze; Verpackungen wie Shampooflaschen, Joghurtbecher; sonstige Erzeugnisse wie Werkzeuge, Schusswaffen.

Wie oben beschrieben soll identifizierbar bedeuten, dass ein Identifikationscode zugeteilt (programmiert, geschrieben) werden kann, welcher Identifikationscode zu einem späteren Zeitpunkt wiederum bestimmt (detektiert, ausgelesen) werden kann.

In Bezug auf ein Werkstück kann insbesondere eine oder mehrere der folgenden Eigenschaften identifiziert werden: eine Seriennummer (welche für jedes Werkstück eindeutig ist), ein Herstellungsdatum, eine Chargennummer (welche für alle Werkstücke einer Herstellungscharge eindeutig ist), eine Produktkennung (welche für alle im Wesentlichen baugleichen Werkstücke einer Baureihe eindeutig ist). Ein Identifikationscode kann eindeutig für ein Werkstück sein (z.B. Seriennummer), muss jedoch nicht eindeutig für ein Werkstück sein (z.B. Produktkennung).

Bevorzugt umfasst das Bereitstellen des erfindungsgemäßen identifizierbaren Werkstoffs das Mischen des urformbaren Ausgangsstoffs mit dem wenigstens einen Identifikationsmittel. Das Mischen kann je nach Zustand (flüssig, plastisch oder teigig, breiig oder pastenförmig, körnig oder pulverförmig, spanförmig, faserförmig, gas- oder dampfförmig, ionisiert) des urformbaren Ausgangsstoff gewählt werden und kann beispielsweise mit beweglichem Mischraum (Trommel) oder beweglichem Mischwerkzeug (Schnecken- oder Schaufelmischer) erfolgen.

Bevorzugt umfasst das Herstellungsverfahren ferner das Programmieren des wenigstens einen Identifikationsmittels. Der Zeitpunkt des Programmierens im Laufe des Herstellungsverfahrens ist hierdurch nicht beschränkt. So kann das Programmieren des wenigstens einen Identifikationsmittel vor dem Mischen mit dem urformbaren Ausgangsstoff, nach dem Mischen mit dem urformbaren Ausgangsstoff, nach dem Bereitstellen des identifizierbaren Werkstoffs und/oder nach dem Durchführen des Urform-Fertigungsverfahrens durchgeführt werden. Bei der Verwendung von mehrfach programmierbaren Identifikationsmitteln können mehrere Schritte des Programmierens zu verschiedenen Zeitpunkten des Herstellungsverfahrens umfasst sein.

Ferner ist erfindungsgemäß ein Werkstück offenbart, welches durch ein Urform-Fertigungsverfahren hergestellt ist, wobei das Urform-Fertigungsverfahren einen erfindungsgemäßen identifizierbaren Werkstoff verwendet.

Bevorzugt kann das Werkstück eine Vielzahl von Identifikationsmitteln umfassen, die in dem Werkstück verteilt angeordnet sind.

Bevorzugt kann das Werkstück durch ein erfindungsgemäßes Herstellungsverfahren hergestellt sein.

Bevorzugt kann das Werkstück dazu ausgelegt sein, dass es bei Entfernung oder Zerstörung des wenigstens einen Identifikationsmittels unbrauchbar oder zerstört wird. Eine Entfernung des wenigstens einen Identifikationsmittels kann beispielsweise physisch mittels eines oder mehrere Werkzeuge (z.B. Feile) geschehen, welche das wenigstens eine Identifikationsmittel freilegen und aus dem Stoffzusammenhalt lösen. Erfindungsgemäß kann die Anzahl an Identifikationsmitteln in dem Werkstück derart groß gewählt werden, dass die Entfernung aller Identifikationsmittel einen großen Aufwand bedeutet und/oder wesentliche Teile des Werkstücks entfernt werden müssen, um alle Identifikationsmittel freizulegen.

Eine Zerstörung des wenigstens einen Identifikationsmittels kann ferner beispielsweise thermisch oder mittels Strahlung erfolgen. Erfindungsgemäß kann der urformbare Ausgangsstoff derart gewählt werden, dass eine Zerstörung des wenigstens einen Identifikationsmittels mittels solcher thermischer oder radiativer Mittel zur Auflösung des Stoffzusammenhalts des Werkstücks führt. Beispielsweise kann der Ausgangsstoffe Additive, wie metallische Partikel, enthalten, welche auf die Strahlung im Mikrowellen- oder UV-Bereich mit starker Hitzeentwicklung reagieren, sodass das Werkstück durch die entstehende Hitze zerstört oder unbrauchbar wird.

Ferner ist erfindungsgemäß ein Identifikationsverfahren offenbart, welches das Bereitstellen eines erfindungsgemäßen Werkstücks und das Detektieren des wenigstens einen Identifikationsmittels in dem Werkstück umfasst.

Im Folgenden soll mit "Detektieren" (oder Auslesen) eines Identifikationsmittel das Lesen eines Identifikationscodes des Identifikationsmittels bezeichnet sein, welcher Identifikationscode zu einem früheren Zeitpunkt programmiert (oder geschrieben) wurde, um das Identifikationsmittel und/oder einen das Identifikationsmittel umfassenden Werkstoff und/oder ein das Identifikationsmittel umfassendes Werkstück zu identifizieren. Das Detektieren des wenigstens einen Identifikationsmittel kann bevorzugt mittels Strahlung, z.B. Radiowellen im Falle von RFID-Transponder(n) als Identifikationsmittel(n), erfolgen.

Bevorzugt können in dem Werkstück eine Vielzahl von Identifikationsmitteln enthalten sein und wenigstens ein Teil der Vielzahl von Identifikationsmitteln detektiert werden.

Bevorzugt kann das Werkstück als identifiziert betrachtet werden, wenn eine vorbestimmte Mindestanzahl der Identifikationsmittel detektiert wird und/oder ein vorbestimmter Mindestanteil der Vielzahl an Identifikationsmitteln detektiert wird.

Ferner ist erfindungsgemäß ein Computerprogramm-Produkt offenbart, das auf einem computerlesbaren Medium gespeichert ist und mit Programmcode, der mittels eines Computer ausgeführt die Schritte eines erfindungsgemäßem Verfahrens, insbesondere eines erfindungsgemäßen Identifikationsverfahrens, durchführt.

### Kurzbeschreibung der Zeichnungen

Im Folgenden sollen einige Ausführungsformen der vorliegenden Erfindung anhand der Zeichnungen beschrieben werden.
- Fig. 1: zeigt ein Ausführungsbeispiel eines erfindungsgemäßen Verfahrens zur Herstellung eines erfindungsgemäßen Werkstücks.
- Fig. 2: zeigt zwei erfindungsgemäße Ausführungsformen von Werkstoffen, je einen mit flüssigen Ausgangsstoff (FIG. 2A) und einen mit festem Ausgangsstoff (FIG. 2B).
- Fig. 3: zeigt ein Identifikationsmittel einer erfindungsgemäßen Ausführungsform.
- Fig. 4: zeigt eine bildliche Darstellung eines erfindungsgemäßen Verfahrens zur Herstellung eines erfindungsgemäßen Werkstücks.
- Fig. 5: zeigt eine bildliche Darstellung eines erfindungsgemäßen Verfahrens zur Herstellung eines erfindungsgemäßen Werkstücks.
- Fig. 6: zeigt ein weiteres Ausführungsbeispiel eines erfindungsgemäßen Verfahrens zur Herstellung eines erfindungsgemäßen Werkstücks.
- Fig. 7: zeigt ein weiteres Ausführungsbeispiel eines erfindungsgemäßen Verfahrens zur Herstellung eines erfindungsgemäßen Werkstücks.
- Fig. 8: zeigt ein Ausführungsbeispiel eines erfindungsgemäßen Identifikationsverfahrens.
- Fig. 9: zeigt ein Flussdiagramm eines Ausführungsbeispiels eines erfindungsgemäßen Verfahrens zur Herstellung eines erfindungsgemäßen Werkstücks.
- Fig. 10: zeigt ein Flussdiagramm eines Ausführungsbeispiels eines erfindungsgemäßen Verfahrens zur Identifikation eines erfindungsgemäßen Werkstücks.

### Beschreibung bevorzugter Ausführungsformen

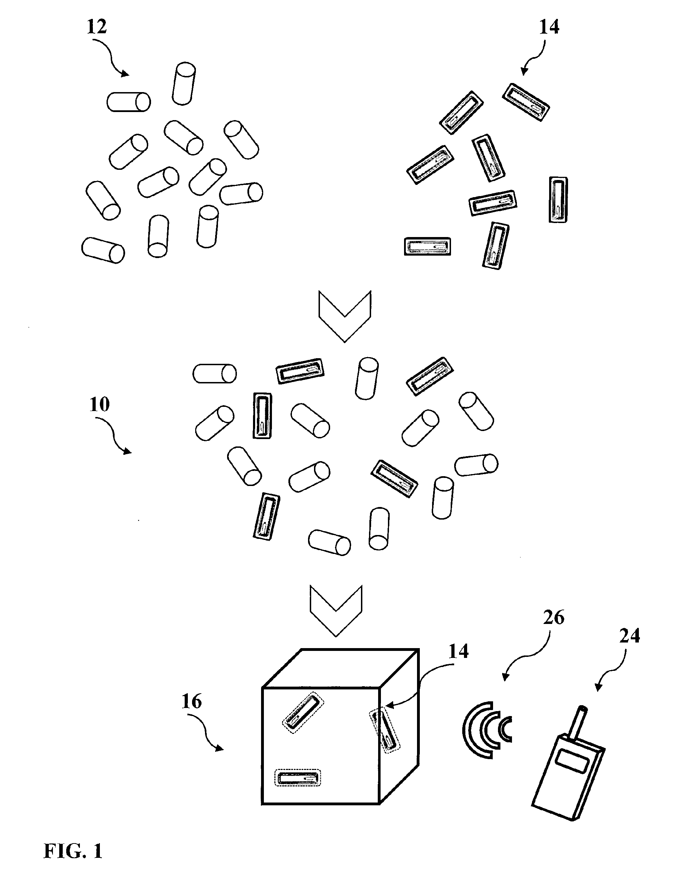

Fig. 1 veranschaulicht ein Ausführungsbeispiel eines Verfahrens zur Herstellung eines identifizierbaren Werkstücks 16. Das Verfahren umfasst das Bereitstellen eines identifizierbaren Werkstoffs 10, das Durchführen eines Urform-Fertigungsverfahren, um aus dem identifizierbaren Werkstoff 10 ein identifizierbares Werkstück 16 herzustellen und das Programmieren wenigstens eines vom Werkstück 16 umfassten Identifikationsmittel 14.

Das Bereitstellen des Werkstoffs 10 umfasst das Mischen eines urformbaren Ausgangsstoffs 12 und einer Vielzahl von Identifikationsmitteln 14, um die Identifikationsmittel 14 verteilt in dem Ausgangsstoff 12 anzuordnen.

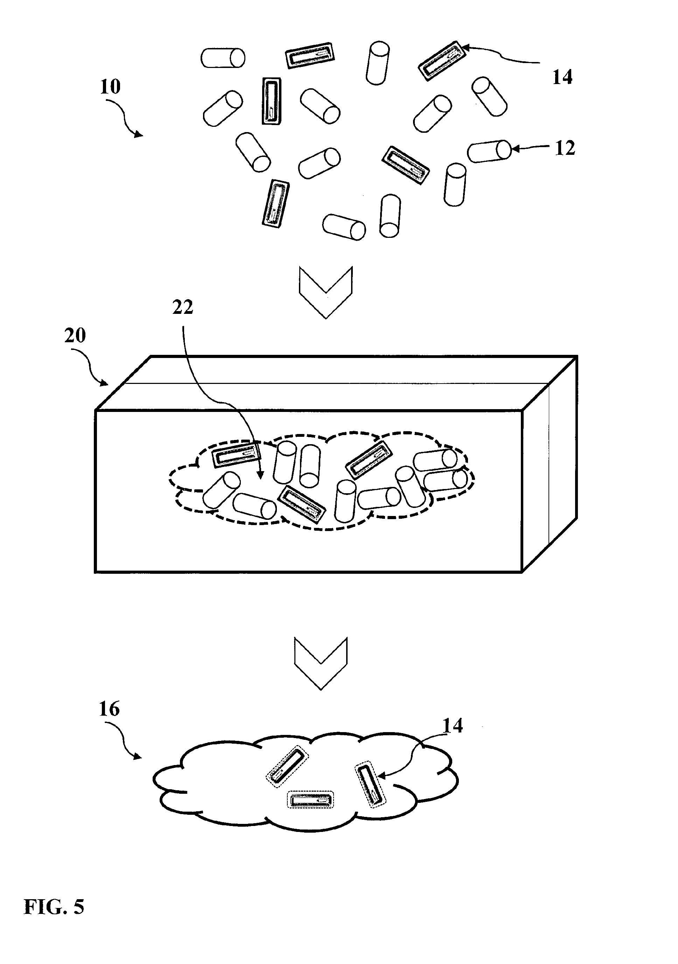

Das Urform-Fertigungsverfahren kann ein Spritzguss-Verfahren sein, wie es weiter unten beispielsweise mit Bezug auf Fig. 5 beschrieben ist, wenngleich die Form des hergestellten Werkstücks im Fall von Fig. 5 wolken-förmig (statt würfel-förmig) ist.

In dem in Fig. 1 dargestellten Ausführungsbeispiel wird wenigstens ein vom Werkstück 16 umfasstes Identifikationsmittel 14 nach Abschluss des Urform-Fertigungsverfahren programmiert. Diese Programmierung geschieht mit Hilfe einer Programmiervorrichtung 24, welche ein Programmier-Signal 26 als elektromagnetisches Wechselfeld im Radiofrequenzbereich sendet. Durch eine Programmierung nach Abschluss des Urform-Fertigungsverfahren kann insbesondere jedes hergestellte Werkstück 16 einen eindeutigen Identifikationscode zugeteilt bekommen, zum Beispiel eine aufsteigende Seriennummer.

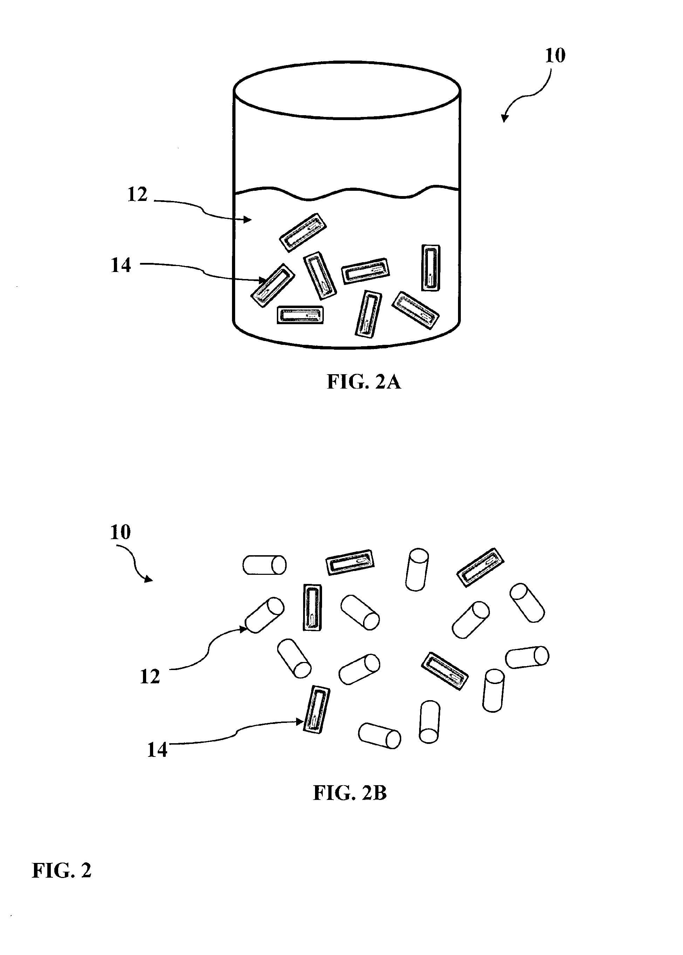

Fig. 2A zeigt eine erfindungsgemäße Ausführungsform eines identifizierbaren Werkstoffs mit einem flüssigen Ausgangsstoff. Der Werkstoff 10 umfasst den urformbaren Ausgangsstoff 12 und eine Vielzahl von Identifikationsmitteln 14.

Im dargestellten Ausführungsbeispiel liegt der Ausgangsstoff 12 als strahlenaushärtbare Flüssigkeit vor. Strahlenaushärtbare Flüssigkeiten, wie beispielsweise photoinitiiert härtende Acrylate, können als Ausgangsstoff 12 für Urformverfahren, wie beispielsweise Stereolithographie oder Rapid-Prototyping, verwendet werden und sind somit urformbar. Photoinitiiert härtende Acrylate liegen als Harze im flüssigen Aggregatzustand vor und können mittels elektromagnetischer Strahlung, wie UV-Licht oder sichtbarem Licht, zur Polymerisation und somit zur Aushärtung angeregt werden.

Im dargestellten Ausführungsbeispiel liegt die Vielzahl von Identifikationsmitteln 14 in dem Ausgangsstoff 12 verteilt vor. Bei den Identifikationsmitteln 14 handelt es sich um Transponder, insbesondere RFID-Transponder. Der Werkstoff 10 ist identifizierbar, da die Identifikationsmittel 14 dazu ausgelegt sind, einen Identifikationscode bereitzustellen, der programmiert (geschrieben) und detektiert (ausgelesen) werden kann.

Fig. 2B zeigt eine erfindungsgemäße Ausführungsform eines Werkstoffs mit einem festen Ausgangsstoff 12. Der Werkstoff 10 umfasst den urformbaren Ausgangsstoff 12 und eine Vielzahl von Identifikationsmitteln 14.

Im dargestellten Ausführungsbeispiel liegt der Ausgangsstoff 12 als Kunststoff-Granulat vor. Das Kunststoff-Granulat besteht aus einer Vielzahl im Wesentlichen gleichartiger, zylinderförmiger Kunststoff-Pellets. Jedes Pellet kann Maße in der Größenordnung von wenigen mm haben. Die Vielzahl von Pellets bildet ein Schüttgut, wodurch Lagerung, Transport und Verar beitung erleichtert werden. Alternativ oder zusätzlich zu einer Vielzahl von gleichartigen Pellets, kann das Kunststoff-Granulat auch polydispers sein, z.B. Pellets verschiedener Geometrien und/oder verschiedener Größe umfassen.

Der Ausgangsstoff 12 kann zusätzlich zu dem dargestellten Kunststoff-Granulat auch Additive, Farbmittel und/oder Kombipräparate (nicht dargestellt) umfassen. Solche Zusatzstoffe können dazu dienen, die Eigenschaften von zu fertigenden Werkstücken zu verändern, insbesondere Eigenschaften wie Farbe, UV-Stabilisierung, Flammschutz oder Antistatik.

Das Kunststoff-Granulat ist urformbar. Insbesondere handelt es sich im dargestellten Ausführungsbeispiel, um ein Granulat von thermoplastischem Kunststoff, wie beispielsweise Polyamide. Thermoplastische Kunststoffe können insbesondere mittels Urformverfahren wie Spritzgießen oder Extrusion verarbeitet werden. Die Verarbeitung kann die Erhöhung von Druck und/oder Temperatur umfassen. So weisen manche Kunststoffe einen Schmelzpunkt von 130 °C auf. Durch Erhöhung der Temperatur kann ein thermoplastischer Kunststoff vom festen Aggregatzustand in den thermoelastischen, thermoplastischen oder flüssigen Aggregatzustand gebracht werden, wodurch das Urformen ermöglicht oder erleichtert wird.

Neben thermoplastischen Kunststoffen sind auch nicht-thermoplastische Kunststoffe und andere Ausgangsstofftypen von der vorliegenden Erfindung umfasst, falls sie urformbar sind. Die nicht-thermoplastischen Kunststoffe umfassen insbesondere Duroplaste und Elastomere. Andere Ausgangsstofftypen umfassen insbesondere Faserverbundwerkstoffe, Harze, Gipse, Keramik, Ton, Metalle.

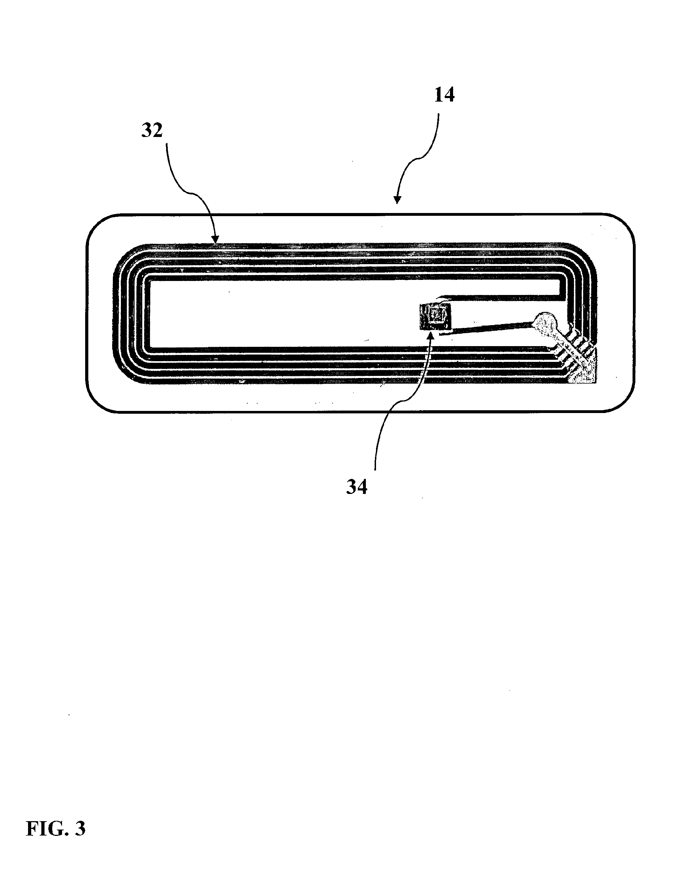

Im dargestellten Ausführungsbeispiel liegt die Vielzahl von Identifikationsmitteln 14 in dem Ausgangsstoff verteilt vor. Die Maße der Identifikationsmittel 14 sind vergleichbar mit denen der Kunststoff-Pellets des Ausgangsstoffs 12. In anderen Ausführungsformen können die Identifikationsmittel 14 größer oder kleiner als die Kunststoff-Pellets des Ausgangsstoffs 12 sein. Der Werkstoff 10 ist identifizierbar, da die Identifikationsmittel 14 dazu ausgelegt sind, dass ein Identifikationscode programmiert (geschrieben) und detektiert (ausgelesen) werden kann. Bei den Identifikationsmitteln 14 handelt es sich, um Transponder, insbesondere RFID-Transponder, wie sie im Folgenden unter Bezugnahme auf Fig. 3 beschrieben sind.

Fig. 3 zeigt ein Identifikationsmittel einer erfindungsgemäßen Ausführungsform. Das dargestellte Identifikationsmittel 14 ist ein RFID-Transponder 14. Der RFID-Transponder 14 umfasst eine Antenne 32 und eine digitale Schaltung 34. Das Identifikationsmittel 14 ist dazu ausgelegt sind, dass ein Identifikationscode programmiert (geschrieben) und detektiert (ausgelesen) werden kann.

Die Antenne 32 dient der Erfassung eines elektromagnetischen Wechselfeldes im Radiofrequenzbereich, hier insbesondere bei 13,56 MHz. Die digitale Schaltung 34 dient als Mikroprozessor und Speicher.

Im Speicher kann ein Identifikationscode als digitaler Wert abgelegt sein oder abgelegt werden. Das Ablegen (Programmieren) eines Identifikationscode kann werkseitig bei der Herstellung des Identifikationsmittels 14 oder zu einem späteren Zeitpunkt beispielsweise mittels Radiofrequenzwellen geschehen. Hierzu kann eine externe Programmiervorrichtung (nicht dargestellt) ein elektromagnetisches Wechselfeld im Radiofrequenzbereich (Radiofrequenzwellen) erzeugen, welches ein Programmier-Signal codiert. Das Wechselfeld wird von der Antenne 32 aufgenommen, an die digitale Schaltung 34 gesendet und vom Mikroprozessor verarbeitet werden. Der Mikroprozessor decodiert das Programmier-Signal, extrahiert den zu programmierenden Identifikationscode und sendet einen entsprechenden Schreibbefehl an den Speicher. In manchen Ausführungsbeispielen kann der Mikroprozessor ferner ein Antwort-Signal erzeugen, welches die erfolgreiche Durchführung des Programmiervorgangs an die externe Programmiervorrichtung signalisiert. Je nach Ausführungsform, kann das Identifikationsmittel dazu ausgelegt sein, dass das Programmieren einmalig oder mehrfach durchgeführt werden kann. Im vorliegenden Ausführungsbeispiel eines passiven RFID-Transponders handelt es sich bei dem von der digitalen Schaltung umfassten Speicher, um einen EEPROM (Electrically Erasable Programmable Read-Only Memory), welcher als nicht-flüchtiger Speicher die Speicherung des Identifikationscodes ohne Stromversorgung aufrechterhalten kann.

Falls im Speicher ein Identifikationscode als digitaler Wert abgelegt ist oder wurde, so kann dieser Identifikationscode mittels Radiofrequenzwellen abgefragt (detektiert) werden. Hierzu kann eine externe Lesevorrichtung (nicht dargestellt) ein elektromagnetisches Wechselfeld im Radiofrequenzbereich (Radiofrequenzwellen) erzeugen, welches ein Abfrage-Signal codiert. Das Wechselfeld wird von der Antenne 32 aufgenommen, an die digitale Schaltung 34 gesendet und vom Mikroprozessor verarbeitet. Der Mikroprozessor decodiert das Abfrage-Signal, sendet einen entsprechenden Lesebefehl an den Speicher und erzeugt ein Antwort-Signal basierend auf dem aus dem Speicher gelesenen Identifikationscode, welches über die Antenne an die externe Programmiervorrichtung gesendet wird. Im vorliegenden Ausführungsbeispiel handelt es sich, um einen passiven RFID-Transponder, welcher ohne separate Energiequelle betrieben wird und dessen Antenne das Antwort-Signal als feldschwächende Modulation oder gegenphasige Reflektion des von der Lesevorrichtung eingestrahlten Wechselfeldes sendet.

Programmier-Signal und/oder Abfrage-Signal und/oder Antwort-Signal können verschlüsselt übertragen werden, z.B. mittels einer 128-Bit Verschlüsselung nach dem AES-Standard (Advanced Encryption Standard).

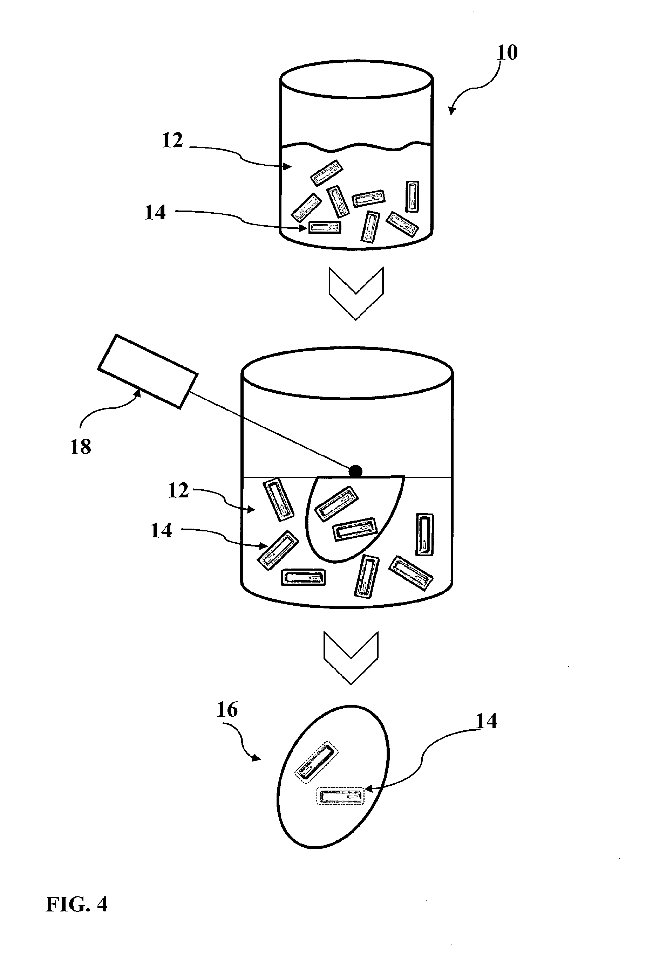

Fig. 4 veranschaulicht ein Ausführungsbeispiel eines Verfahrens zur Herstellung eines identifizierbaren Werkstücks. Das Herstellungsverfahren umfasst das Bereitstellen eines identifizierbaren Werkstoffs 10 und das Durchführen eines Urform-Fertigungsverfahren, um aus dem identifizierbaren Werkstoff 10 ein identifizierbares Werkstück 16 herzustellen.

Der identifizierbare Werkstoff 10 umfasst einen urformbaren Ausgangsstoff 12 und wenigstens ein in dem Ausgangsstoff 12 angeordnetes Identifikationsmittel 14. Bei dem urformbaren Ausgangsstoff 12 handelt es sich, um eine strahlenaushärtbare Flüssigkeit, insbesondere ein photoinitiiert härtendes Acrylharz. Als Urform-Fertigungsverfahren ist hier ein Stereolithographie-Verfahren vorgesehen. Hierbei wird der Strahl einer UV-Lichtquelle 18 derart auf die strahlenaushärtbare Flüssigkeit 12 fokussiert, dass diese im Wesentlichen punktuell aushärtet. Durch Rasterung des Strahls der UV-Lichtquelle 18 kann schichtweise der Stoffzusammenhalt für ein dreidimensionales Werkstück 16 hergestellt werden. Je nach Ausführungsform des Stereolithographie-Verfahrens werden die UV-Lichtquelle, der Brennpunkt des Strahls und/oder das in der Herstellung befindliche Werkstück bewegt, um die schichtweise Rasterung durchzuführen.

Im Werkstoff 10 enthaltene Identifikationsmittel 14 werden je nach Lage von der strahlenaushärtbaren Flüssigkeit umgeben und im Laufe der Aushärtung von dem entstehenden Werkstück umschlossen. Im vorliegenden Fall handelt es sich, um ein Werkstück in Ei-Form mit zwei Identifikationsmitteln.

Fig. 5 veranschaulicht ein Ausführungsbeispiel eines Verfahrens zur Herstellung eines identifizierbaren Werkstücks. Das Herstellungsverfahren umfasst das Bereitstellen eines identifizierbaren Werkstoffs 10 und das Durchführen eines Urform-Fertigungsverfahren, um aus dem identifizierbaren Werkstoff 10 ein identifizierbares Werkstück 16 herzustellen.

Der identifizierbare Werkstoff 10 umfasst einen urformbaren Ausgangsstoff 12 und wenigstens ein in dem Ausgangsstoff 12 angeordnetes Identifikationsmittel 14. Im dargestellten Fall sind eine Vielzahl gleichartiger und verteilt angeordneter Identifikationsmittel 14 umfasst. Im dargestellten Fall umfasst das herzustellende Werkstück 16 eine Vielzahl von Identifikationsmitteln 14, wenngleich nicht alle der vom Werkstoff 10 umfassten Identifikationsmittel 14, weil nicht der gesamte Werkstoff 10 zur Herstellung des Werkstückes 16 verwendet wird. In anderen Ausführungsformen kann das Werkstück 16 alle vom Werkstoff 10 umfasste Identifikationsmittel 14 umfassen.

Bei dem urformbaren Ausgangsstoff 12 handelt es sich, um ein thermoplastisches KunststoffGranulat. Das Urform-Fertigungsverfahren hier ist ein Spritzguss-Verfahren. Hierbei wird der Werkstoff 10 erhitzt (nicht dargestellt) und dadurch der urformbare Ausgangsstoff 12 in den thermoplastischen Zustand gebracht. Ferner wird wenigstens ein Teil des Werkstoffs 10 zusammen mit darin enthaltenen Identifikationsmitteln 14 in einen Hohlraum 22 einer Gussform 20 gespritzt, sodass der Hohlraum 22 im Wesentlichen ausgefüllt ist. Die Identifikationsmittel 14 bleiben von dem Werkstoff 10 umfasst. In dem Hohlraum befinden sich Identifikationsmittel 14 und urformbarer Ausgangsstoff 12. Die Identifikationsmittel 14 sind RFID-Transponder, welche vorzugsweise hitzebeständig bis zu einer Temperatur (z.B. 180°C) jenseits der Schmelztemperatur des Kunststoff-Granulats (z.B. 130°C) sind.

Der Hohlraum 22, dargestellt durch eine gestrichelte Linie, wird von der Gussform 20 umschlossen. Durch Abkühlen wird der vom Hohlraum 22 umschlossene Teil des Werkstoffs 10 in den festen Aggregatzustand gebracht. Während dieses Aushärtens nimmt er im Wesentlichen die geometrische Form des Hohlraums 22 an und bildet dadurch das Werkstück 16. Durch Entfernen der Gussform 20 wird das hergestellte Werkstück 16 zugänglich gemacht. Das Werkstück umfasst funktionstüchtige Identifikationsmittel 14 und ist somit ein identifizierbares Werkstück. Im vorliegenden Fall handelt es sich, um ein Werkstück in Form einer Kunststoff-Wolke. Je nach Gussform können Werkstücke verschiedenster Geometrie, Form und Größe hergestellt werden. Je nach Urform-Fertigungsverfahren und urformbarem Ausgangsstoff können Werkstücke verschiedenster Zusammensetzung und Eigenschaften hergestellt werden.

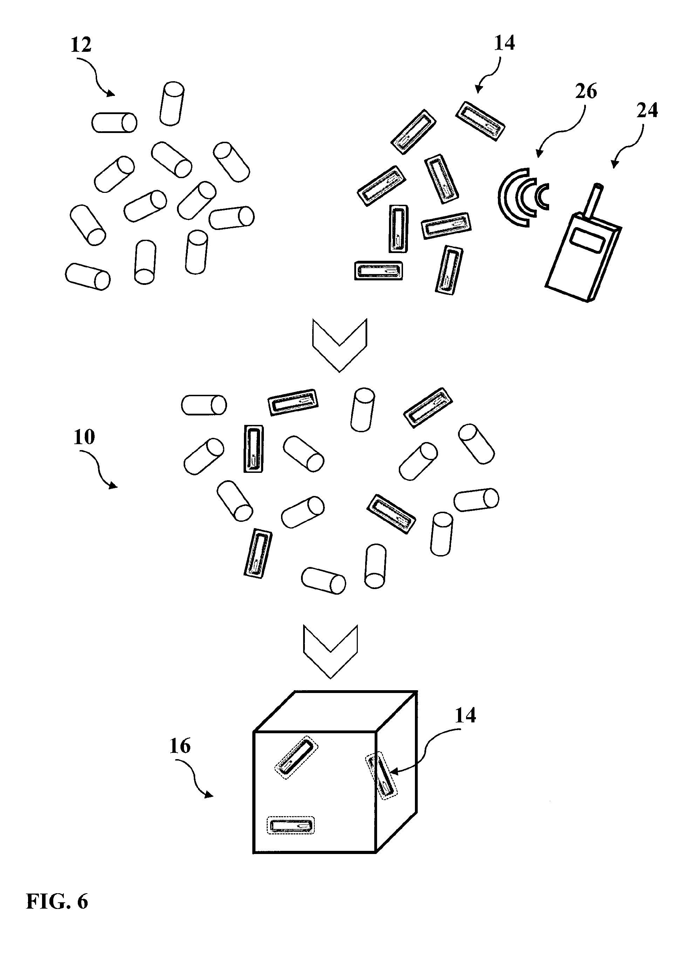

Fig. 6 veranschaulicht ein weiteres Ausführungsbeispiel eines erfindungsgemäßen Verfahrens zur Herstellung eines identifizierbaren Werkstücks 16. Das Verfahren umfasst das Programmieren von Identifikationsmitteln 14, das Bereitstellen eines identifizierbaren Werkstoffs 10 durch Mischen eines urformbaren Ausgangsstoffs 12 und einer Vielzahl der programmierten Identifikationsmittel 14 und das Durchführen eines Urform-Fertigungsverfahren, um aus dem identifizierbaren Werkstoff 10 ein identifizierbares Werkstück 16 herzustellen und.

Das Verfahren ist in wesentlichen Teilen ähnlich zu dem in Fig. 1 dargestellten Verfahren. Jedoch wird die Programmierung der Identifikationsmittel 14 in dem in Fig. 6 dargestellten Verfahren nicht nach Abschluss des Urform-Fertigungsverfahren, sondern vor dem Mischen von Ausgangsstoff 12 und Identifikationsmitteln 14 durchgeführt. Durch eine Programmierung vor dem Mischen mit dem Ausgangsstoff 12 können insbesondere alle hergestellten Werkstücke 16 einen gleichen Identifikationscode zugeteilt bekommen, zum Beispiel eine gemeinsame Produktnummer.

Das Durchführen des Urform-Fertigungsverfahren kann im Wesentlichen ähnlich zu dem in Fig. 5 dargestellten Verfahren durchgeführt werden, wenngleich die Form des hergestellten Werkstücks im Fall von Fig. 6 würfel-förmig (statt wolken-förmig) ist.

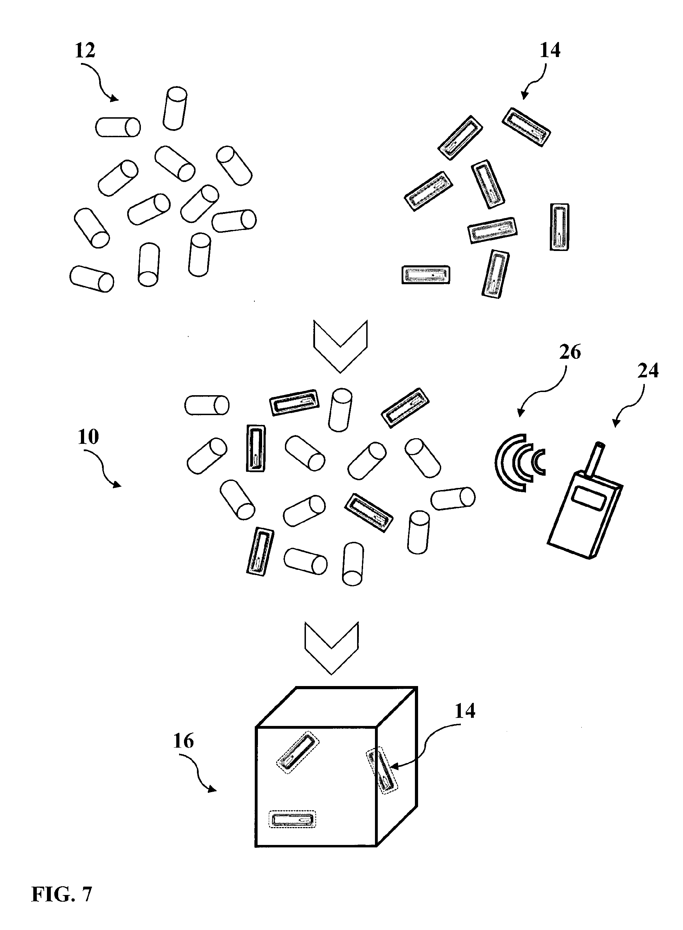

Fig. 7 veranschaulicht ein weiteres Ausführungsbeispiel eines erfindungsgemäßen Verfahrens zur Herstellung eines identifizierbaren Werkstücks 16. Das Verfahren umfasst das Bereitstellen eines identifizierbaren Werkstoffs 10 durch Mischen eines urformbaren Ausgangsstoffs 12 und einer Vielzahl von Identifikationsmitteln 14, das Programmieren der vom Werkstoff 10 umfassten Identifikationsmittel 14 und das Durchführen eines Urform-Fertigungsverfahren, um aus dem identifizierbaren Werkstoff 10 ein identifizierbares Werkstück 16 herzustellen.

Das Verfahren ist in wesentlichen Teilen ähnlich zu dem in Fig. 1 dargestellten Verfahren. Jedoch wird die Programmierung der Identifikationsmittel 14 in dem in Fig. 7 dargestellten Verfahren nicht nach Abschluss des Urform-Fertigungsverfahren, sondern nach dem Mischen von Ausgangsstoff 12 und Identifikationsmitteln 14 durchgeführt. Durch eine Programmierung nach dem Mischen mit dem Ausgangsstoff 12 kann insbesondere jeder bereitgestellte Werkstoff 10 einen eindeutigen Identifikationscode zugeteilt bekommen, zum Beispiel eine Chargennummer.

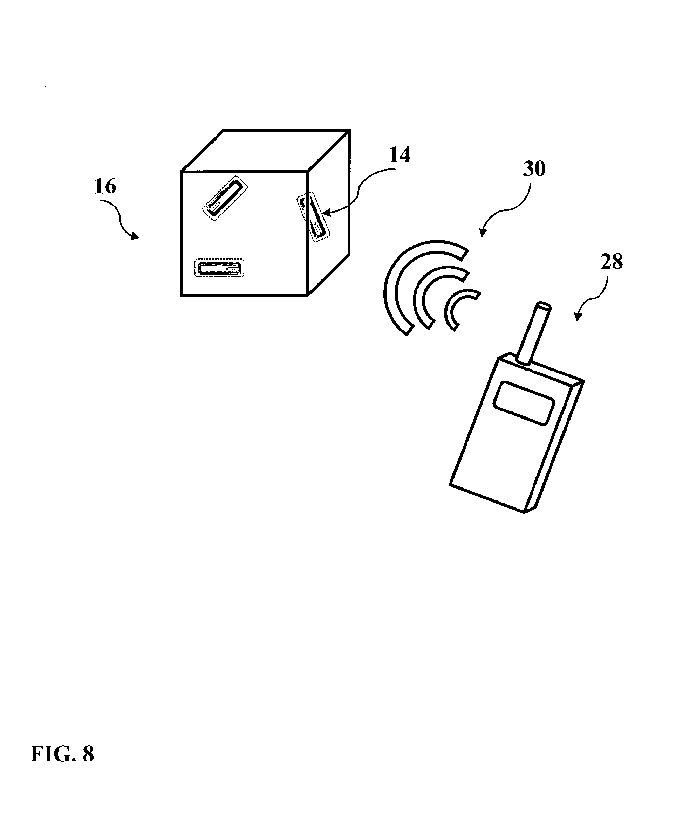

Fig. 8 veranschaulicht ein Ausführungsbeispiel eines erfindungsgemäßen Identifikationsverfahrens. Das Identifikationsverfahren umfasst das Bereitstellen eines identifizierbaren Werkstücks 16 und das Detektieren von wenigstens einem von dem Werkstück 16 umfassten Identifikationsmittel 14.

Das Detektieren des wenigstens einen Identifikationsmittel 14 geschieht mit Hilfe einer Detektier-Vorrichtung 28, welche ein Abfrage-Signal 30 als elektromagnetisches Wechselfeld im Radiofrequenzbereich sendet. Durch die Detektion kann der Identifikationscode des Werkstücks 16 ausgelesen werden. Hierbei kann es sich insbesondere, um eine für das Werkstück 16 eindeutige Seriennummer oder um einen für die Baureihe eindeutige Produktnummer handeln.

Im vorliegenden Fall sind in dem Werkstück eine Vielzahl von Identifikationsmitteln enthalten und es wird wenigstens ein Teil der Vielzahl von Identifikationsmitteln detektiert. Das Werkstück wird als identifiziert betrachtet, wenn eine vorbestimmte Mindestanzahl der Identifikationsmittel detektiert wird und/oder ein vorbestimmter Mindestanteil der Vielzahl an Identifikationsmitteln detektiert wird.

Im Falle der dargestellten drei Identifikationsmittel 14 im Werkstück 16 kann der vorbestimmte Mindestanteil an Identifikationsmitteln beispielsweise 50% betragen. Somit wird das Werkstück als identifiziert betrachtet wenn zwei oder mehr der drei Identifikationsmittel detektiert werden. Dies kann in manchen Ausführungsbeispielen vorteilhaft sein, um eine verlässliche Identifikation zu erreichen, selbst wenn einzelne der Identifikationsmittel fehlerhaft sind, nicht programmiert wurden und/oder aufgrund ihrer Lage oder Orientierung innerhalb des Werkstücks nicht oder nicht korrekt detektiert werden können.

Die Detektier-Vorrichtung kann als Computer ausgeführt sein, welcher dazu ausgelegt ist, die Schritte des erfindungsgemäßen Identifikationsverfahrens durchzuführen. Hierzu kann der Computer Programmcode ausführen, welcher ein Computerprogramm-Produkt darstellt und auf einem computerlesbaren Medium gespeichert ist.

Das Verfahren zur Identifikation eines identifizierbaren Werkstücks kann zu einer Vielzahl von Zwecken durchgeführt werden. Diese Zwecke umfassen (a) eine Qualitätskontrolle nach Abschluss der Herstellung eines Werkstücks, (b) eine Lagerinventur, (c) eine Registrierung eines Bezahlvorgangs und (d) eine Überprüfung von Exportbestimmungen. Insbesondere wird dies anhand der folgenden Beispiele verdeutlicht.

So kann es bei einer Qualitätskontrolle vorteilhaft sein, zum Beispiel an einem hergestellten Lenkrad mit Hilfe des Identifikationsverfahrens die Herkunft oder Charge des verwendeten Ausgangsstoffs zu identifizieren und bei Mängeln gezielt jene Werkstücke zu isolieren, welche aus dem Ausgangsstoff dieser Herkunft oder Charge hergestellt wurden.

Zur Automatisierung einer Inventur, beispielsweise von einer großen Anzahl von Werkzeugen, kann das Identifikationsverfahren vorteilhaft verwendet werden indem die Werkzeuge identifiziert werden, z.B. anhand Ihrer Inventar- oder Seriennummer, und ihre Präsenz sowie eventuell ihr Standort, ihr Zustand, etc. in einer Datenbank registriert werden.

Die Registrierung eines Bezahlvorgangs, zum Beispiel beim Kaufs eines Shampoos, kann das Identifikationsverfahren die Produktnummer des zu kaufenden Produkts und folglich den Preis ermitteln. Im Gegensatz zur heute vielfach verwendeten Identifikation mittels Barcode ist ein mit einem erfindungsgemäßen Herstellungsverfahren hergestelltes Erzeugnis in jeder Lage und Orientierung identifizierbar. Ferner erhöht ein funkbasiertes Identifikationsverfahren, zum Beispiel per Radiofrequenzwellen, die Diebstahlsicherheit. Dies gilt insbesondere bei automatisierten Bezahlvorgängen, welche ohne Kassier-Angestellten auskommen.

Ferner unterliegen beispielsweise Schusswaffen bestimmten Exportbestimmungen, welche anhand ihrer Seriennummer überprüft werden können. Herkömmliche Verfahren zur Identifikation beruhen auf der mechanischen Prägung einer Seriennummer, welche jedoch mechanisch entfernt oder verändert werden kann. Durch die Durchführung eines erfindungsgemäßen Herstellungsverfahrens kann eine identifizierbare Schusswaffe als Werkstück mit einer Vielzahl verteilt angeordneter Identifikationsmittel hergestellt werden. Die Zerstörung oder Entfernung aller Identifikationsmittel ist nicht möglich oder zumindest nicht möglich ohne die Schusswaffe zu zerstören oder unbrauchbar zu machen.

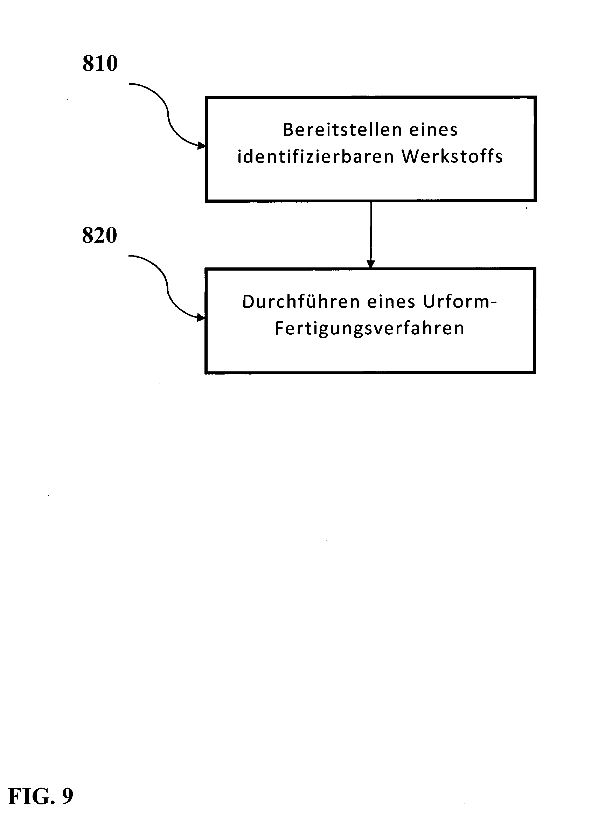

Fig. 9 zeigt ein Flussdiagramm eines Verfahrens zur Herstellung eines identifizierbaren Werkstücks. Das Verfahren umfasst das Bereitstellen (810) eines identifizierbaren Werkstoffs, welcher einen urformbaren Ausgangsstoff und wenigstens ein in dem Ausgangsstoff angeordnetes Identifikationsmittel umfasst. Ferner umfasst das Verfahren das Durchführen (820) eines Urform-Fertigungsverfahrens, um aus dem identifizierbaren Werkstoff ein identifizierbares Werkstück herzustellen.

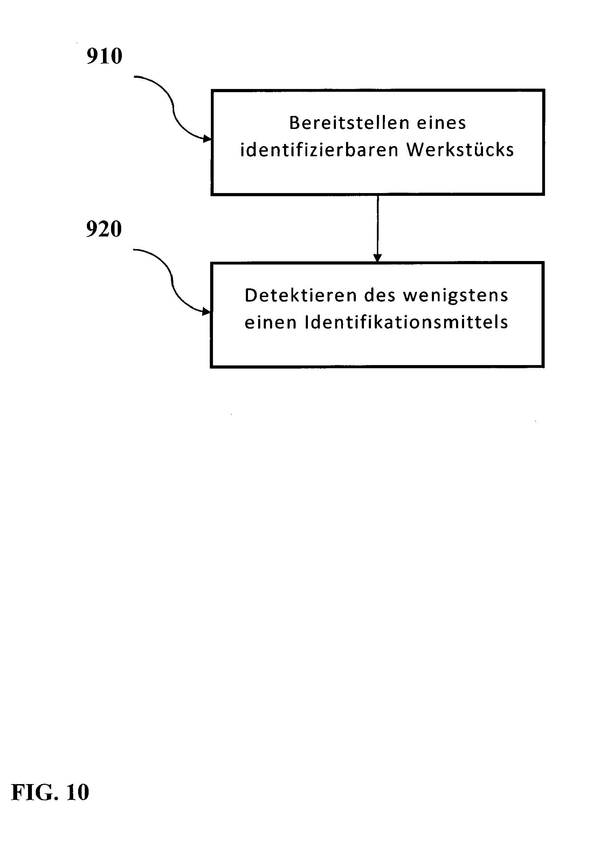

Fig. 10 zeigt ein Flussdiagramm eines Identifikationsverfahrens. Das Identifikationsverfahren umfasst das Bereitstellen (910) eines identifizierbaren Werkstücks, hergestellt durch ein Urform-Fertigungsverfahren, wobei das Urform-Fertigungsverfahren einen identifizierbaren Werkstoff verwendet. Ferner umfasst das Identifikationsverfahren das Detektieren (920) des wenigstens einen Identifikationsmittels in dem Werkstück.

**Bezugszeichenliste**

| | |
|---|---|
| Werkstoff | 10 |
| Ausgangsstoff | 12 |
| Identifikationsmitteln | 14 |
| Werkstück | 16 |
| UV-Lichtquelle | 18 |
| Gussform | 20 |
| Hohlraum | 22 |
| Programmiervorrichtung | 24 |
| Programmier-Signal | 26 |
| Detektier-Vorrichtung | 28 |
| Abfrage-Signal | 30 |
| Antenne | 32 |
| digitale Schaltung | 34 |

## Patentansprüche

1. Identifizierbarer Werkstoff, umfassend
- einen urformbaren Ausgangsstoff, und
- wenigstens ein in dem Ausgangsstoff angeordnetes Identifikationsmittel.

2. Identifizierbarer Werkstoff nach Anspruch 1, wobei eine Vielzahl von Identifikationsmitteln in dem Ausgangsstoff verteilt angeordnet sind.

3. Identifizierbarer Werkstoff nach einem der vorherigen Ansprüche, wobei der Ausgangsstoff wenigstens einen der folgenden Ausgangsstofftypen umfasst: Kunststoff, Faserverbundwerkstoff, Harz, Strahlenaushärtbare Flüssigkeit, Gips, Keramik, Ton, Metall.

4. Identifizierbarer Werkstoff nach einem der vorherigen Ansprüche, wobei aus dem Ausgangsstoff mittels wenigstens eines der folgenden Urform-Fertigungsverfahren ein fester Körper herstellbar ist:
- Thermoplastisches Umformen, Spritzgießen, Extrudieren, Lasersintern, 3D-Drucken, Druckgießen

5. Identifizierbarer Werkstoff nach einem der vorherigen Ansprüche, wobei das wenigstens eine Identifikationsmittel ein Transponder, vorzugsweise RFID-Transponder, ist.

6. Identifizierbarer Werkstoff nach einem der vorherigen Ansprüche, wobei das wenigstens eine Identifikationsmittel wenigstens eine der folgenden Komponenten umfasst:
- eine Antenne, einen Schwingkreis, einen Schaltkreis, einen Mikroprozessor, einen Festwertspeicher (ROM), einen einmalig programmierbaren Festwertspeicher (PROM), ein EPROM, ein EEPROM, ein FRAM oder FeRAM,

7. Verfahren zur Herstellung eines identifizierbaren Werkstücks, umfassend
- Bereitstellen eines identifizierbaren Werkstoffs nach einem der Ansprüche 1 bis 6, und
- Durchführen eines Urform-Fertigungsverfahrens, um aus dem identifizierbaren Werkstoff ein identifizierbares Werkstück herzustellen.

8. Verfahren nach Anspruch 7, ferner umfassend:
- Programmieren des wenigstens einen Identifikationsmittels.

9. Werkstück, hergestellt durch ein Urform-Fertigungsverfahren, wobei das Urform-Fertigungsverfahren einen identifizierbaren Werkstoff nach einem der Ansprüche 1 bis 6 verwendet.

10. Werkstück nach Anspruch 9, hergestellt durch ein Verfahren nach einem der Ansprüche 7 oder 8.

11. Werkstück nach Anspruch 9 oder 10, das bei der Entfernung oder Zerstörung des Identifikationsmittels selbst zerstört wird.

12. Identifikationsverfahren, umfassend
- Bereitstellen eines Werkstücks nach einem der Ansprüche 9 bis 11, und
- Detektieren des wenigstens einen Identifikationsmittels in dem Werkstück.

13. Identifikationsverfahren nach Anspruch 12, wobei
- in dem Werkstück eine Vielzahl von Identifikationsmitteln enthalten ist, und
- wenigstens ein Teil der Vielzahl von Identifikationsmitteln detektiert wird.

14. Identifikationsverfahren nach Anspruch 13, wobei das Werkstück als identifiziert betrachtet wird, wenn eine vorbestimmte Mindestanzahl der Identifikationsmittel detektiert wird und/oder ein vorbestimmter Mindestanteil der Vielzahl an Identifikationsmitteln detektiert wird.

15. Computerprogramm-Produkt, das auf einem computerlesbaren Medium gespeichert ist und mit Programmcode, der mittels eines Computer ausgeführt die Schritte des in einem der Ansprüche 12 bis 14 definierten Verfahrens durchführt.
